# EUROPEAN PATENT SPECIFICATION

(11) **EP 3 581 027 B1**
(45) Date of publication and mention of the grant of the patent: **03.03.2021**
(21) Application number: 19180413.7
(22) Date of filing: 14.06.2019
(51) Int. Cl.: A01K 31/16, B65G 17/00, B65G 17/12, B65G 47/66, B65B 23/06, B65G 17/36, B65G 17/38

(54) **EGG TRANSPORT DEVICE, IN PARTICULAR AN EGG LIFT**
TRANSPORTVORRICHTUNG FÜR EIER, INSBESONDERE EIERELEVATOR
DISPOSITIF DE TRANSPORT D'OEUFS, EN PARTICULIER ÉLÉVATEUR D'OEUFS

(30) Priority: 14.06.2018 NL 2021126
(43) Date of publication of application: 18.12.2019
(73) Proprietor: Van de Ven Beheer B.V., 5521 DZ Eersel (NL)
(72) Inventor: Van de Ven, Dick Hendrikus Cornelis, 5521 HE Eersel (NL); Abrahams, Jacobus Marie, 6027 NN Soerendonk (NL)
(74) Representative: Verhees, Godefridus Josephus Maria

(56) References cited:
- EP-A1- 2 990 360
- WO-A1-2016/118069
- WO-A2-2006/074077
- US-B2- 8 127 916

## Description

### Field of the invention

The invention relates to an egg transport device, in particular an egg lift, comprising:
- feeding means for feeding eggs to the egg transport device, which feeding means comprise a feeding plate having a top side on which eggs are supplied, which feeding plate is provided with a plurality of parallel spaced slots an open end of which is present at an edge of the feeding plate and a closed end is present spaced from the opposite edge of the feeding plate, wherein the eggs are supplied from this opposite edge, and wherein the parts of the feeding plate present between the slots form fingers,
- discharge means for discharging eggs from the egg transport device, and
- transport means present between the feeding means and the discharge means for transferring eggs from the feeding means to the discharge means, which transport means comprise a flexible endless transport element which is provided with comb-shaped carriers located in longitudinal direction of the transport element and present at a mutual distance behind one another, which carriers are provided with a plurality of carrier teeth which are located at spaced intervals transversely to the longitudinal direction of the transport element and which move through the slots at the location of the feeding means, wherein free ends of the carrier teeth near the closed end of the slots enter the slots while coming from below and move towards the open end of the slots, wherein they rise above the slots with an increasing length, which carrier teeth have a front side which the eggs come into contact with during operation.

### State of the art

A transport device according to the preamble of claim 1 is known from WO2006/074077A. This known transport device is not specifically designed for conveying eggs. If this known transport device were used for conveying eggs, problems could arise during the supply of eggs and the subsequent conveyance of the eggs because the eggs end up on top of each other at the supply point and are thereby damaged and / or supplied in longitudinal direction transversely to the carriers, so that they can get jammed between consecutive carriers and be crushed.

### Summary of the invention

It is an object of the invention to provide an egg transport device, more particularly an egg lift, of the type described in the preamble, wherein the chance of eggs being damaged is smaller than with the known device. For this purpose the egg transport device according to the invention is characterized in that the top side of the fingers has a greater friction coefficient than the friction coefficient of the front side of the carrier teeth so that during operation the eggs roll over the top side of the fingers and slide along the front side of the carrier teeth. Since the eggs roll over the fingers at the feeding means, eggs present on top of each other will roll off each other and the eggs will always be carried along with their longitudinal direction parallel to the longitudinal direction of the carriers. As a result, there is no or hardly any chance of the eggs being damaged.

The eggs roll from a conveyor feeding belt onto the feeding plate and are taken along by the carriers in the same direction as the rolling direction. Only after the eggs have been taken along by the carriers will the transport direction gradually change to the vertical direction. The eggs are thus carried along smoothly and the change of direction also takes place smoothly. As a result, the chance of damage to the eggs is smaller than with the known egg transport device and no blockages due to feeding disturbances can arise. The egg transport device according to the invention can cope better with disruptions in the supply because the objects (dung clods, dead chickens, etc.) not belonging to the egg flow are taken along by the carriers and drop from the egg transport device at the gradual transition from the horizontal direction to the vertical direction.

By increasing the speed of the transport means, in the egg transport device according to the invention, the processing capacity of eggs may be greater than the feeding capacity of the conveyor belt, so that congestion of eggs can be avoided. By making the transport means run faster than the conveyor belt, the supply flow of eggs is stretched so that no blockage can occur. If the eggs were lying on top of each other in the supply flow, the bottom eggs would be carried along smoothly and the top eggs would gradually roll off the bottom eggs. This is in contrast to the known transport device in which the top eggs will abruptly fall off the bottom eggs.

Since the surface of the top side of the fingers is rougher than that of the front side of the carrier teeth, the friction coefficient between the eggs and the fingers is greater than that between the eggs and the carriers, causing the eggs to roll over the fingers and not slide. As a result, the eggs will spread out better across the width of the carriers and they will lie horizontally with their longitudinal axis parallel to the longitudinal axis of the carriers, so that the carriers can be placed a shorter distance apart, so that the capacity increases at the same transfer rate.

An embodiment of the egg transport device according to the invention is characterized in that the fingers are flexible in a direction perpendicular to the top side of the feeding plate. This even further reduces the risk of damage to the eggs during operation.

The fingers are preferably so flexible that during operation they bend under the weight of the eggs and are supported by the parts of the carriers present between the carrier teeth, so that they do not bend any further.

A further embodiment of the egg transport device according to the invention is characterized in that:
- the discharge means comprise a discharge plate which has a top side on which eggs are discharged, which discharge plate is provided with a plurality of parallel spaced further slots of which an open end is present at an edge of the discharge plate and a closed end is present remote from the opposite edge of the discharge plate, the eggs being discharged from this opposite edge, and
- wherein the carrier teeth enter the further slots via the open end of the further slots, where the free ends of the carrier teeth protrude to their full extent above the further slots, which carrier teeth move towards the closed end of the further slots where they project above the further slots with a diminishing length until the free ends disappear into the further slots.

Here too, the direction of the eggs is changed gradually, leading to a diminished risk of damage compared to an abrupt change of direction.

A still further embodiment of the egg transport device according to the invention is characterized in that the transport element comprises a chain which is movable along a guide of the transport means and includes a plurality of mutually connected links connected by link pins which are present at right angles to the longitudinal direction of the transport element, wherein in one of two mutually connected links the link pin is present with play in a slotted hole and an elastic spacer is present between the link pin and the side of the boundary wall of the hole located close to the other one of the two links.

By stretching the chain, whereby successive / adjacent links are pulled away from each other, the elastic spacers will be resilient and thereby keep the chain in tension. This makes it possible to dispense with a chain tensioner when such a chain is used, because the chain itself maintains tension when it is mounted in a slightly stretched state. The use of such a chain also allows the egg transport device to work in two directions without the need to adjust / move a tensioning device for this purpose.

It should be noted that a chain, in which the link pins via which the links are connected to each other are present with play in holes and elastic spacers are located between the link pins and the boundary walls of the holes, which elastic spacers put an end to the play and by stretching the links show a resilient behaviour and thereby are able to keep the chain in tension, can also be used in devices or systems other than the egg lift described here and that the possibility of protecting such a chain separately is maintained.

The link pin preferably has a reduced diameter in the middle or has a recess and in that the spacer is partly present in the reduced-diameter area or recess. As a result, the spacer also ensures axial confinement of the link pin.

Furthermore, links are preferably provided with stops which limit the mutual rotation of the links around the link pins, so that the chance of the chain getting jammed is smaller and the eggs are not crushed.

A further embodiment of the egg transport device according to the invention is characterized in that the guide comprises two metal rods running parallel to each other and each link is provided with plastic guide elements which are movable along the rods. By making the guides of a high-quality material, the links can be made of a relatively inexpensive plastic.

Each guide element preferably comprises two spaced plastic lips which are present on either one of the two sides of one of the metal rods during guiding and if they come loose from the metal rods at or close to the feeding means, are able by themselves to slide around the metal rod. The lips are designed such that they can be caught by the rods and slide onto the rods.

### Brief description of the drawings

The invention will be explained in more detail below based on an example of embodiment of the egg transport device according to the invention shown in the drawings, in which:
Fig. 1 shows the egg transport device designed as an egg lift;
Fig. 2 shows a perspective view of the discharge means of the egg transport device;
Fig. 3 shows a side view of the feeding means;
Fig. 4 shows a sectional view of the discharge means;
Fig. 5 shows a perspective view of a separate carrier;
Fig. 6 shows a sectional view of a detail of the feeding means shown in Fig. 3;
Fig. 7 shows a bottom view of a detail of the connection between two mutually connected links; and
Fig. 8 shows a sectional view of an alternative embodiment of the discharge means.

### Detailed description of the drawings

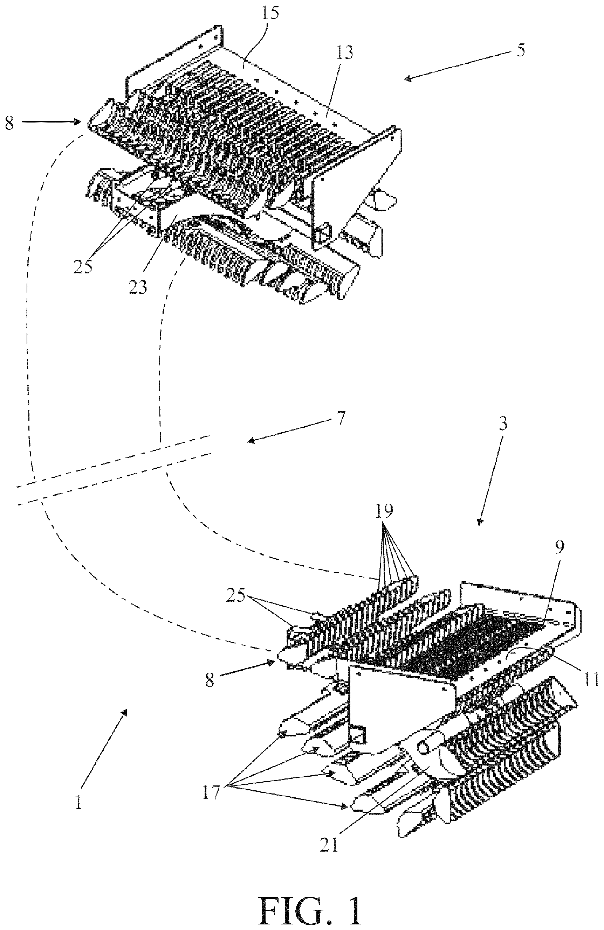

Fig. 1 shows an egg transport device designed as an egg lift, partly shown diagrammatically. The egg lift 1 comprises feeding means 3 for feeding eggs, as well as discharge means 5 for discharging eggs, and transport means 7 located between the feeding means and the discharge means for transferring eggs in vertical direction. The feeding means have a feeding plate 9 with a top side 11 onto which the eggs roll coming from a conveyor belt during operation. The discharge means are provided with a discharge plate 13 having a top side 15 from which the eggs are discharged. The transport means 7 have a flexible endless transport element 8 which is provided with comb-shaped carriers 17 which are arranged one behind the other and which are provided with adjacent carrier teeth 19. The transport means further have a frame formed by mutually attached frame parts 21, 23 to which two parallel guide rods 25 are attached which form the guide along which the transport element can be moved.

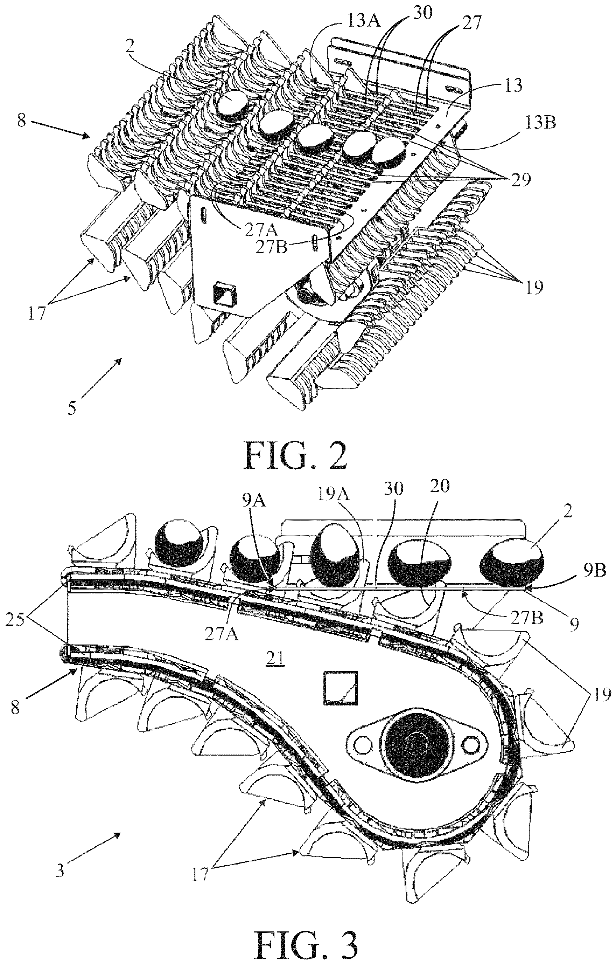

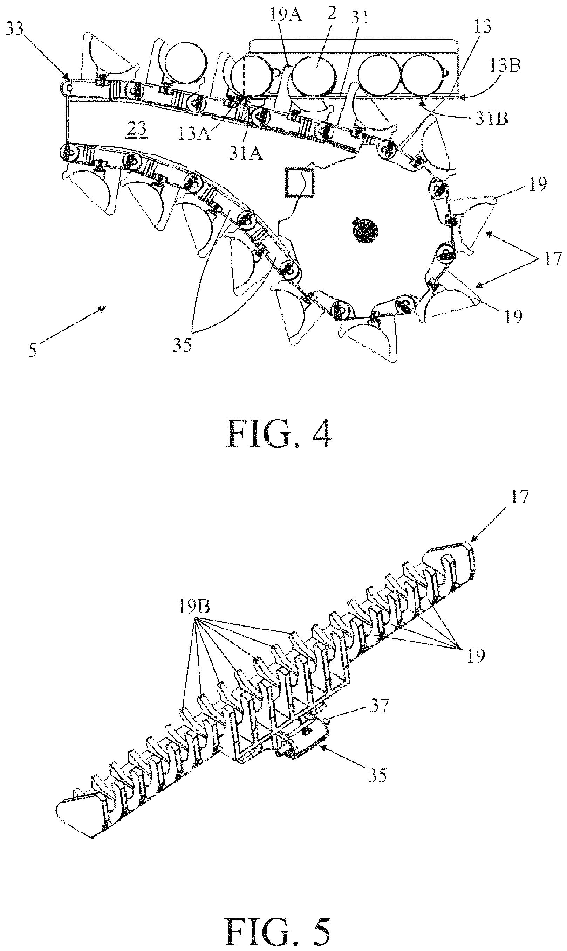

Figs. 3 and 4 show the feeding means 3 and the discharge means 5 in side view and in sectional view, respectively. The feeding plate 9 and discharge plate 13 are substantially identical. Only the orientation and direction of movement of the transport element 8 relative to the feeding and discharge plates is different. Fig. 2 shows a perspective view of the discharge means 5 by way of illustration. The feeding plate 9 and the discharge plate 13 are provided with a plurality of parallel slots 27 of which an open end 27A s present at an edge 9A, 13A respectively, of the feeding plate or discharge plate respectively and a closed end 27B is present spaced from the opposite edge 9B, 13B respectively, of the feeding plate or discharge plate. From this opposite edge the eggs 2 are fed or discharged respectively, and they roll into or out of the egg lift. The parts located between the slots 27 of the feeding plate form resilient fingers 29.

The top side 30 of the fingers 29 has a higher friction coefficient than that of the front side 20 of the carrier teeth 19, so that during operation the eggs 2 roll over the top side 30 of the fingers and slide along the front side 20 of the carrier teeth. The fingers 29 are flexible in a direction perpendicular to the top side 11 of the feeding plate 9. The fingers 29 are so flexible that during operation they bend under the weight of the eggs 2 and are supported by the parts of the carriers located between the carrier teeth 19 so that they do not bend through any further. Also at the discharge means the surface of the top side of the fingers is rougher than that of the front side of the carrier teeth.

Fig. 4 shows a sectional view of the discharge means. The discharge plate 13 is provided with a plurality of parallel further slots 31 (see also Fig. 1) of which an open end 31A is present at an edge 13A of the discharge plate and a closed end 31B is present at a distance from the opposite edge 13B of the discharge plate.

The carrier teeth 19 of the comb-shaped carriers 17 move through the slots 27 and further slots 31 during the operation of the egg lift. At the feeding means 3, the free ends 19A of the carrier teeth 19 move from below through the slots close to the closed end 27B of the slots and when they move towards the open end 27A of the slots, the carrier teeth 19 rise above the slots with an increasing length while taking the eggs along. This is clearly visible in Fig. 3.

In the discharge means 5, see Fig. 4, the carrier teeth 19 of the carriers 17 enter the further slots via the open end 31A, while the free ends 19A of the carrier teeth project to their full extent above the further slots 31. During the transfer of the carrier teeth 19 to the closed end 31B of the further slots, the carrier teeth project with a diminishing length above the further slots and thereby release the eggs, until the free ends finally disappear completely into the further slots. As a result, the eggs 2 are smoothly pushed onto the discharge plate 13.

The transport element is formed by a chain 33 which can be moved along the guide rods. The chain is comprised of a plurality of mutually connected links 35. These links are connected to each other by link pins 37 which are present at right angles to the longitudinal direction of the chain. The chain is driven by a sprocket 39. The carriers 17 are releasably arranged on the links and may also be arranged on the links in a position rotated through 180 degrees if the direction of transport of the chain were reversed.

In Fig. 5 a carrier 17 mounted on a link 35 is shown in enlarged fashion. The carrier teeth 19 are bent forwards in the direction of transport. The link is provided with a slotted hole through which a link pin 37 projects with play. The link is furthermore provided with stops which limit the mutual rotation of the links around the link pins. These stops are formed by elongated ends 19B of the carrier teeth 19 located in the middle of the carrier 17.

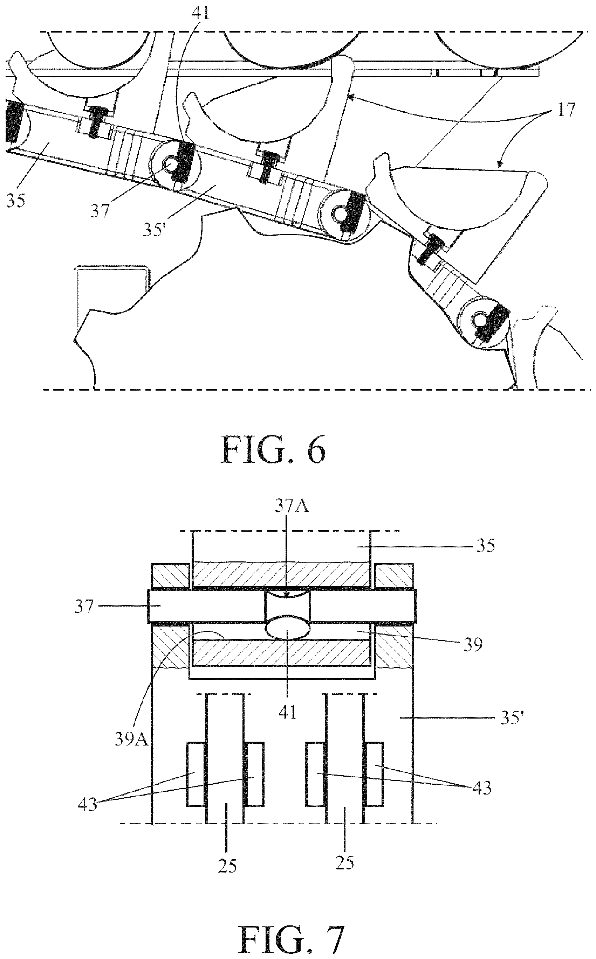

Fig. 6 shows a sectional view of the detail of the feeding means shown in Fig. 3 in which the mutual coupling of the links is clearly visible. Fig. 7 shows a top view of a detail of the coupling of two links. The link pin 37 is located with play in a hole 39 in one of the links 35. Between the link pin 37 and the side 39A of the boundary wall of the hole near the other one of the two links 35' an elastic spacer 41 is positioned which makes it possible to install the chain in the egg lift under pretension so that a chain tensioner may be omitted. The link pin 37 has a reduced diameter 37A in the middle and the spacer 41 is partly present in the reduced-diameter region to enclose the link pin 37 in axial direction.

The bottom of each link has two pairs of plastic guide elements 43 which are slidable along the two parallel guide rods 25 (for example made of stainless steel and / or chrome). These guide elements are formed by plastic lips which are present on both sides of one of the metal rods during the guiding action. If the links in the returning part of the chain became detached from the guide, the lips at the feeding means would slide over the metal rods again.

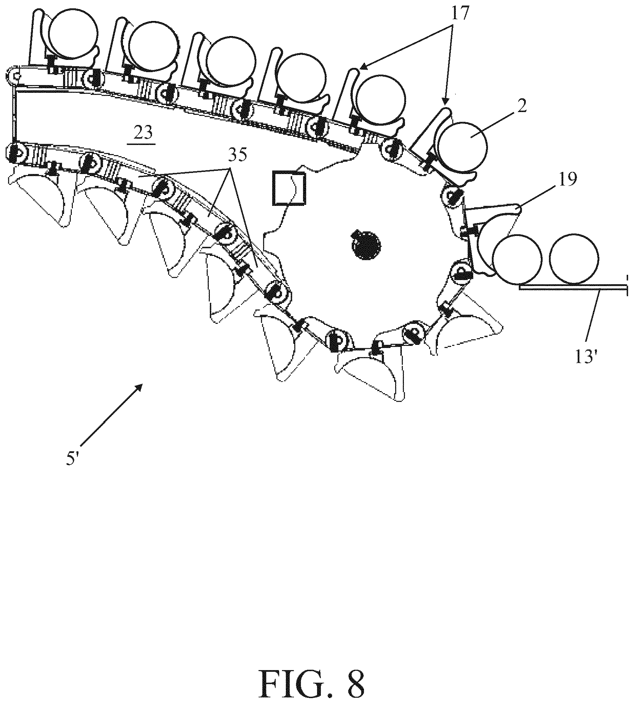

Fig. 8 shows an alternative embodiment of the discharge means. In these discharge means 5' the discharge plate 13' is not provided with slots and is located at a lower level. The eggs 2 taken along by the carriers 17 roll from the carrier teeth 19 onto the discharge plate 13' as a result of gravity. The carrier teeth 19 of the carriers 17 move just along the discharge plate. Since the carrier teeth need not move through slots, there is less chance of the transport means getting disrupted.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. An egg transport device, in particular an egg lift (1), comprising:
- feeding means (3) for feeding eggs (2) to the egg transport device, which feeding means (3) comprise a feeding plate (9) having a top side (11) on which eggs are supplied, which feeding plate is provided with a plurality of parallel spaced slots (27) an open end (27A) of which is present at an edge (9A) of the feeding plate and a closed end (27B) is present spaced from the opposite edge (9B) of the feeding plate, wherein the eggs are supplied from this opposite edge (9B), and wherein the parts of the feeding plate (9) present between the slots (27) form fingers (29),
- discharge means (5) for discharging eggs from the egg transport device, and
- transport means (7) present between the feeding means and the discharge means for transferring eggs from the feeding means to the discharge means, which transport means (7) comprise a flexible endless transport element (33) which is provided with comb-shaped carriers (17) located in longitudinal direction of the transport element and present at a mutual distance behind one another, which carriers are provided with a plurality of carrier teeth (19) which are located at spaced intervals transversely to the longitudinal direction of the transport element and which move through the slots at the location of the feeding means, wherein free ends (19A) of the carrier teeth near the closed end (27B) of the slots enter the slots (27) coming from below and move towards the open end (27A) of the slots where they rise above the slots with an increasing length, which carrier teeth (19) have a front side which the eggs come into contact with during operation,
**characterized in that** the top side (30) of the fingers (29) has a greater friction coefficient than the friction coefficient of the front side (20) of the carrier teeth (19) so that during operation the eggs (2) roll over the top side (30) of the fingers and slide along the front side (20) of the carrier teeth.

2. An egg transport device as claimed in claim 1, **characterized in that** the fingers (29) are flexible in a direction perpendicular to the top side (11) of the feeding plate (9).

3. An egg transport device as claimed in claim 1 or 2, **characterized in that** the fingers (29) are so flexible that during operation they bend under the weight of the eggs (2) and are supported by the parts of the carriers present between the carrier teeth (19), so that they do not bend any further.

4. An egg transport device as claimed in claim 1, 2 or 3, **characterized in that**:
- the discharge means (5) comprise a discharge plate (13) which has a top side (15) on which eggs are discharged, which discharge plate is provided with a plurality of parallel spaced further slots (31) of which an open end (31A) is present at an edge (13A) of the discharge plate and a closed end (31B) is present remote from the opposite edge (13B) of the discharge plate, the eggs being discharged from this opposite edge, and
- wherein the carrier teeth (19) enter the further slots (31) via the open end (31A) of the further slots, where the free ends (19A) of the carrier teeth protrude to their full extent above the further slots, which carrier teeth move towards the closed end (31B) of the further slots where they project above the further slots with a diminishing length until the free ends disappear into the further slots.

5. An egg transport device as claimed in claim 1, 2, 3 or 4, **characterized in that** the transport element (33) comprises a chain which is movable along a guide of the transport means and includes a plurality of mutually connected links (35, 35') connected by link pins (37) which are present at right angles to the longitudinal direction of the transport element, wherein in one of two mutually connected links (35) the link pin is present with play in a slotted hole (39) and an elastic spacer (41) is present between the link pin and the side (39A) of the boundary wall of the hole located close to the other one of the two links.

6. An egg transport device as claimed in claim 5, **characterized in that** the link pin (37) has a reduced diameter in the middle or has a recess and **in that** the spacer (41) is partly present in the reduced-diameter area (37A) or recess.

7. An egg transport device as claimed in claim 5 or 6, **characterized in that** links (35) are provided with stops (17B) which limit the mutual rotation of the links around the link pins (37).

8. An egg transport device as claimed in claim 5, 6 or 7, **characterized in that** the guide comprises two metal rods (25) running parallel to each other and each link (35) is provided with plastic guide elements which are movable along the rods.

9. An egg transport device as claimed in claim 8, **characterized in that** each guide element comprises two spaced plastic lips (43) which are present on either one of the two sides of one of the metal rods (25) during guiding and if they come loose from the metal rods at or close to the feeding means (3) they are able by themselves to slide around the metal rod.

## Patentansprüche

1. Eiertransportvorrichtung, insbesondere ein Eierlift (1), umfassend:
- Eingabemittel (3) zum Einführen von Eiern (2) in die Eitransportvorrichtung, wobei die Eingabemittel (3) eine Zufuhrplatte (9) mit einer Oberseite (11) umfassen, auf der Eier zugeführt werden, wobei die Zufuhrplatte mit einer Anzahl von parallelen, gegenseitig beabstandeten Schlitze (27) versehen ist, von denen ein offenes Ende (27A) an einer Kante (9A) der Zuführplatte vorgesehen ist und ein geschlossenes Ende (27B) beabstandet von der gegenüberliegenden Kante (9B) der Zuführplatte vorgesehen ist, wobei die Eier von diese gegenüberliegende Kante (9B) zugeführt werden, und wobei die Teile der Zufuhrplatte (9), die zwischen den Schlitzen (27) vorhanden sind, Finger (29) bilden,
- Ausgabemittel (5) zum Ausgeben von Eiern aus der Eitransportvorrichtung, und
- Transportmittel (7), die zwischen dem Eingabamittel und dem Ausgabemittel zum Bewegen von Eiern vom Eingabemittel zum Ausgabemittel vorhanden sind, wobei das Transportmittel (7) ein flexibles Endlostransportelement (33) umfasst, das mit in Längsrichtung vom Transportelement hinter einander gegenseitig beabstandeten kammförmige Treiber (17) versehen ist, die mit einer Anzahl von Treiberzähnen (19) versehen sind, die in einem gegenseitigen Abstand quer zur Längsrichtung des Transportelements nebeneinander angeordnet sind, wobei sich die Treiberzähne (19) durch die Schlitze an der Stelle der Eingabemittel bewegen, wobei sich die Treiberzähne nahe dem geschlossenen Ende (27B) von den Schlitzen mit freien Enden (19A) von unten in die Schlitze (27) geraten und sich in Richtung des offenen Endes (27A) der Schlitze bewegen, wobei sie mit zunehmender Länge über die Schlitze hinausragen, wobei die Treiberzähnen (19) einer Front aufwiesen, mit der die Eier während des Gebrauchs in Kontakt kommen,
**dadurch gekennzeichnet, dass** die Oberseite (30) der Finger (29) einen größeren Reibungskoeffizienten aufweist als der Reibungskoeffizient der Vorderseite (20) der mitreißenden Zähne (19), so dass die Eier (2) während des Betriebs über die Oberseite (30) der Finger rollen und entlang der Vorderseite (20) der Mitnahmezähne gleiten.

2. Eitransportvorrichtung nach Anspruch 1, **dadurch gekennzeichnet, dass** die Finger (29) in einer Richtung senkrecht zur Oberseite (11) der Zuführplatte (9) flexibel sind.

3. Eitransportvorrichtung nach Anspruch 1 oder 2, **dadurch gekennzeichnet, dass** die Finger (29) flexibel sind, so dass sie sich während des Betriebs unter dem Gewicht der Eier (2) verbiegen und aufgrund der Teile der Treiber, die zwischen den Treiberzähne (19) vorhanden sind, unterstützt werden, damit sie sich nicht weiter biegen.

4. Eitransportvorrichtung nach Anspruch 1, 2 oder 3, **dadurch gekennzeichnet, dass**:
- die Ausgabemittel (5) eine Entladungsplatte (13) umfassen mit einer Oberseite (15), auf die Eier entladen werden, wobei diese Entladungsplatte mit einer Anzahl paralleler, voneinander beabstandeter weiterer Schlitze (31) versehen ist, von denen ein offenes Ende (31A) an eine Kante (13A) der Entladungsplatte vorhanden ist und ein geschlossenes Ende (31B) von der gegenüberliegenden Kante (13B) der Entladungsplatte beabstandet ist, wobei die Eier von dieser gegenüberliegenden Kante entladen werden, und
- wobei die Mitreißzähne (19) über das offene Ende (31A) der weiteren Schlitze in die weiteren Schlitze (31) eintreten, wobei die freien Enden (19A) der Mitreißzähne maximal über die weiteren Schlitze hinausragen, wobei die Mitreißzähne zum geschlossenen Ende (31A). 31B) der weiteren Schlitze hin mitreißen, wobei sie mit abnehmender Länge über die weiteren Schlitze hinausragen, bis die freien Enden in den weiteren Schlitzen verschwinden.

5. Eitransportvorrichtung nach Anspruch 1, 2, 3 oder 4, **dadurch gekennzeichnet, dass** das Transportelement (33) eine Kette umfasst, die entlang einer Führung des Transportmittels verschiebbar ist und einer Anzahl durch senkrecht zur Längsrichtung des Transportelements zueinander angeordnete Schwenkwellen (37) miteinander verbundene Glieder (35, 35') umfasst, wobei in einer von zwei miteinander verbundenen Glieder (35) die Schwenkachse mit Spiel in einem Loch (39) vorhanden ist und zwischen der Schwenkachse und der nahe der anderen der beiden Verbindungen vorhandene Seite (39A) der Begrenzungswand des Lochs ein elastisches Füllstück (41) vorgesehen ist.

6. Eitransportvorrichtung nach Anspruch 5, **dadurch gekennzeichnet, dass** die Schwenkwelle (37) in der Mitte verjüngt ist oder eine Aussparung aufweist und das Füllstück (41) teilweise in der Verjüngung (37A) oder Aussparung vorhanden ist.

7. Eitransportvorrichtung nach Anspruch 5 oder 6, **dadurch gekennzeichnet, dass** die Glieder (35) mit Anschlägen (17B) versehen sind, die die gegenseitige Drehung der Glieder um die Scharnierachsen (37) begrenzen.

8. Eiertransportvorrichtung nach Anspruch 5, 6 oder 7, **dadurch gekennzeichnet, dass** die Führung zwei parallel zueinander verlaufende Metallstangen (25) umfasst und jede Verbindung (35) mit Kunststoffführungselementen versehen ist, die entlang der Stangen verschiebbar sind.

9. Eitransportvorrichtung nach Anspruch 8, **dadurch gekennzeichnet, dass** jedes Führungselement zwei voneinander beabstandete Kunststofflippen (43) aufweist, die während des Führens auf beiden Seiten eines der Metallstangen (25) vorhanden sind und wenn sie sich von den Metallstangen lösen, können sie selbst an oder in der Nähe der Eingabemittel (3) um die Metallstange gleiten.

## Revendications

1. Dispositif de transport d'œufs, en particulier un élévateur d'œufs (1), comprenant :
- des convoyeurs d'apport (3) pour l'apport d'œufs (2) dans le dispositif de transport d'œufs, lesquels convoyeurs d'apport (3) comprennent une plaque d'apport (9) ayant une face supérieure (11) sur laquelle sont déposés des œufs, laquelle plaque d'apport est pourvue d'un certain nombre de rainures (27) étant parallèles et à distance l'une de l'autre, rainures dont une extrémité ouverte (27A) se trouve sur un bord (9A) de la plaque d'apport et une extrémité fermée (27B) se trouve à distance du bord opposé (9B) de la plaque d'apport, où les œufs sont apportés depuis ce bord opposé (9B), et où les parties de la plaque d'apport (9) se trouvant entre les rainures (27) forment des doigts (29),
- des convoyeurs d'évacuation (5) pour l'évacuation d'œufs en provenance du dispositif de transport d'œufs, et
- des moyens de transport (7) se trouvant entre les convoyeurs d'apport et les convoyeurs d'évacuation pour déplacer des œufs depuis les convoyeurs d'apport vers les convoyeurs d'évacuation, lesquels moyens de transport (7) comprennent un élément de transport (33) flexible sans fin pourvu de tasseaux (17) en forme de peigne se trouvant à distance l'un derrière l'autre dans le sens de la longueur de l'élément de transport et pourvus d'un certain nombre de dents d'entrainement (19) étant à distance l'une à côté de l'autre, étant perpendiculaires au sens de la longueur de l'élément de transport et se déplaçant à travers les rainures au niveau des convoyeurs d'apport, où les dents d'entrainement avec leurs extrémités libres (19A) viennent d'en bas dans les rainures (27) près de l'extrémité fermée (27B) des rainures et se déplacent vers l'extrémité ouverte (27A) des rainures où elles font saillie au-dessus des rainures avec une longueur croissante, lesquelles dents d'entrainement (19) sont pourvues d'une face avant avec laquelle les œufs entrent en contact pendant l'utilisation,
**caractérisé en ce que** la face supérieure (30) des doigts (29) a un coefficient de frottement plus grand que le coefficient de frottement de la face avant (20) des dents d'entrainement (19) afin que pendant le fonctionnement les œufs (2) roulent sur la face supérieure (30) des doigts et glissent le long de la face avant (20) des dents d'entrainement.

2. Dispositif de transport d'œufs selon la revendication 1, **caractérisé en ce que** les doigts (29) sont flexibles dans une direction perpendiculaire à la face supérieure (11) de la plaque d'apport (9).

3. Dispositif de transport d'œufs selon la revendication 1 ou 2, **caractérisé en ce que** les doigts (29) sont suffisamment flexibles pour plier sous le poids des œufs (2) pendant le fonctionnement, et sont soutenus par les parties des tasseaux se trouvant entre les dents d'entrainement (19) afin de ne pas se courber davantage.

4. Dispositif de transport d'œufs selon la revendication 1, 2 ou 3, **caractérisé en ce que** :
- les convoyeurs d'évacuation (5) comprennent une plaque d'évacuation (13) ayant une face supérieure (15) sur laquelle sont évacués des œufs, laquelle plaque d'évacuation est pourvue d'un certain nombre de rainures supplémentaires (31) étant parallèles et à distance l'une de l'autre, rainures dont une extrémité ouverte (31A) se trouve sur un bord (13A) de la plaque d'évacuation et une extrémité fermée (31B) se trouve à distance du bord opposé (13B) de la plaque d'évacuation, où les œufs sont évacués depuis ce bord opposé, et
- où les dents d'entrainement (19) viennent dans les rainures supplémentaires (31) au travers de l'extrémité ouverte (31A) des rainures supplémentaires, où les extrémités libres (19A) des dents d'entrainement font saillie au maximum au-dessus des rainures supplémentaires, lesquelles dents d'entrainement se déplacent vers l'extrémité fermée (31B) des rainures supplémentaires où elles font saillie au-dessus des rainures supplémentaires avec une longueur décroissante jusqu'à ce que les extrémités libres disparaissent dans les rainures supplémentaires.

5. Dispositif de transport d'œufs selon la revendication 1, 2, 3 ou 4, **caractérisé en ce que** l'élément de transport (33) comprend une chaîne étant mobile le long d'une glissière des moyens de transport et comprend un certain nombre de maillons (35, 35') reliés entre eux par des axes de pivot (37) étant perpendiculaires au sens de la longueur de l'élément de transport, où dans l'un des deux maillons (35) reliés entre eux, l'axe de pivot se trouve dans un trou (39) avec du jeu et entre l'axe de pivot et la face (39A) de la paroi limite du trou se trouvant près de l'autre des deux maillons se trouve une entretoise élastique (41).

6. Dispositif de transport d'œufs selon la revendication 5, **caractérisé en ce que** l'axe de pivot (37) a un rétrécissement progressif en son milieu ou est pourvu d'une encoche et **en ce que** l'entretoise (41) se trouve partiellement dans le rétrécissement progressif (37A) ou l'encoche.

7. Dispositif de transport d'œufs selon la revendication 5 ou 6, **caractérisé en ce que** les maillons (35) sont pourvus de butées (17B) qui limitent la torsion des maillons entre eux autour des axes de pivot (37).

8. Dispositif de transport d'œufs selon la revendication 5, 6 ou 7, **caractérisé en ce que** la glissière comprend deux barres métalliques (25) s'étendant parallèlement l'une à l'autre et **en ce que** chaque maillon (35) est pourvu d'éléments de glissière en plastique qui coulissent le long des barres.

9. Dispositif de transport d'œufs selon la revendication 8, **caractérisé en ce que** chaque élément de glissière comprend deux lèvres (43) en plastique se trouvant à distance l'une de l'autre et qui, pendant le glissage, se trouvent de chaque côté d'une des barres métalliques (25) et qui, lorsqu'elles se détachent des barres métalliques, peuvent glisser d'elles-mêmes autour de la barre métallique au niveau des ou près des convoyeurs d'apport (3).
